# EUROPEAN PATENT APPLICATION

(11) **EP 4 203 106 A1**
(43) Date of publication of application: **28.06.2023**
(21) Application number: 21871122.4
(22) Date of filing: 11.08.2021
(51) Int. Cl.: H01M 4/525, H01M 4/131

(54) **POSITIVE ELECTRODE SHEET FOR SECONDARY BATTERY, SECONDARY BATTERY, BATTERY MODULE, BATTERY PACK, AND DEVICE**

(30) Priority: 22.09.2020 CN 202011003864
(71) Applicant: Contemporary Amperex Technology Co., Limited, Fujian PRC 352100 (CN)
(72) Inventor: LENG, Xue, Ningde, Fujian 352100 (CN); DU, Rui, Ningde, Fujian 352100 (CN); LIU, Na, Ningde, Fujian 352100 (CN); LIU, Yongchao, Ningde, Fujian 352100 (CN); NI, Huan, Ningde, Fujian 352100 (CN)
(74) Representative: Jacob, Reuben Ellis
(86) International application number: PCT/CN2021/112009
(87) International publication number: WO 2022/062745

(57) **Abstract**

The present application relates to the field of electrochemistry, and in particular to a positive electrode sheet for a secondary battery, a secondary battery, a battery module, a battery pack and a device. The present application provides a positive electrode sheet for a secondary battery. The positive electrode sheet comprises a positive electrode current collector and a positive electrode active material layer located on the surface of the positive electrode current collector; the positive electrode active material layer comprises positive electrode active materials, the positive electrode active materials comprise a first lithium nickel transition metal oxide and a second lithium nickel transition metal oxide, the first lithium nickel transition metal oxide comprises a first substrate and a first coating layer located on the surface of the first substrate, the first substrate is secondary particles, and the second lithium nickel transition metal oxide is particles having monocrystalline or monocrystalline-like morphology. In the positive electrode sheet provided by the present application, by adjusting and controlling the particle size distribution of the positive electrode active materials after mixing and an OI value of the electrode sheet, the compressive strength of positive electrode active material particles in the positive electrode sheet is increased, and the problem of particle cracking of the positive electrode active material particles is effectively restrained.

## Description

### CROSS-REFERENCE TO RELATED APPLICATIONS

This application claims priority to Chinese patent application No. 202011003864.0, filed on September 22, 2020 and entitled "POSITIVE ELECTRODE SHEET FOR SECONDARY BATTERY, SECONDARY BATTERY, BATTERY MODULE, BATTERY PACK, AND DEVICE", which is incorporated herein by reference in its entirety.

### TECHNICAL FIELD

This application relates to the electrochemical field, and in particular, to a positive electrode sheet for a secondary battery, a secondary battery, a battery module, a battery pack, and a device.

### BACKGROUND

Requirements for endurance mileage of electromobiles are becoming increasingly high, which imposes higher requirements on energy density of traction batteries. Increase in the energy density of the traction batteries largely depends on selected positive electrode materials. Based on selection principles of a high capacity and a high discharge voltage platform, lithium-nickel transition metal oxides (for example, nickel-cobalt-manganese ternary materials) are increasingly widely applied. Herein, increased nickle content can significantly increase gram capacities, which increases the energy density; and therefore, selection of the lithium-nickel transition metal oxides containing a high nickel content currently has become a main trend.

However, with the increases in the nickel contents in the lithium-nickel transition metal oxides, the lithium-nickel transition metal oxides become more difficult to prepare: High temperature leads to severe lithium evaporation; while low temperature leads to insufficient growth of crystal particles, resulting in poor processability.

In addition, increases in the nickel contents in the lithium-nickel transition metal oxides also affects stability of material structures, and intensifies transition from layered structures to rock-salt phase structures on the surface; and surface oxygen release also aggravates side reactions between electrolytes and material surfaces.

### SUMMARY

In view of the foregoing disadvantages of the prior art, this application is intended to provide a positive electrode plate for secondary battery, a secondary battery, a battery module, a battery pack, and an apparatus, to resolve the problem in the prior art.

To achieve the foregoing objective and another related objective, a first aspect of this application provides a positive electrode plate for a secondary battery, where the positive electrode plate includes a positive electrode current collector and a positive electrode active substance layer located on a surface of the positive electrode current collector, the positive electrode active substance layer includes a positive electrode active substance, the positive electrode active substance contains a first lithium-nickel transition metal oxide and a second lithium-nickel transition metal oxide, the first lithium-nickel transition metal oxide contains a first matrix and a first coating layer located on a surface of the first matrix, the first matrix is secondary particles, and a chemical formula of the first matrix is expressed by formula I:

Li₁₊ₐ₁Niₓ₁Co_{y1}Mn_{z1}M_{b1}O₂₋ₑ₁Xₑ₁ (I)

in the formula I, -0.1 < a1 < 0.1, 0.5 ≤ x1 ≤ 0.95, 0.05 ≤ y1 ≤ 0.2, 0.03 ≤ z1 ≤ 0.4, 0 ≤ b1 ≤ 0.05, 0 ≤ e1 ≤ 0.1, and x1 + y1 + z1 + b1 = 1, where M is selected from a combination of one or more of Al, Ti, Zr, Nb, Sr, Sc, Sb, Y, Ba, B, Co, and Mn, and X is selected from F and/or Cl;
the first coating layer is selected from a metal oxide and/or a non-metal oxide;
the second lithium-nickel transition metal oxide is single crystal particles or particles with quasi-single crystal morphology;
particle size distribution of the positive electrode active substance satisfies that Dᵥ90 ranges from 10 µm to 20 µm and 40 µm < (Dᵥ90 × Dᵥ50)/Dᵥ10 < 90 µm; and
when press density of the positive electrode plate ranges from 3.3 g/cm³ to 3.5 g/cm³, an OI value of the positive electrode plate ranges from 10 to 40.

In any one of the foregoing embodiments, the OI value of the positive electrode plate is a ratio of a diffraction peak area corresponding to a crystal plane (003) to that corresponding to a crystal plane (110) of the positive electrode active substance in an XRD diffraction pattern of the positive electrode plate.

In any one of the foregoing embodiments, the second lithium-nickel transition metal oxide contains a second matrix, and a chemical formula of the second matrix is expressed by formula II:

Li₁₊ₐ₂Niₓ₂Co_{y2}Mn_{z2}M'_{b2}O₂₋ₑ₂X'ₑ₂ (II)

in Formula II, -0.1 < a2 < 0.1, 0.5 ≤ x2 ≤ 0.95, 0.05 ≤ y2 ≤ 0.2, 0.03 ≤ z2 ≤ 0.4, 0 ≤ b2 ≤ 0.05, 0 ≤ e2 ≤ 0.1, and x2 + y2 + z2 + b2 = 1, where M' is selected from a combination of one or more of Al, Ti, Zr, Nb, Sr, Sc, Sb, Y, Ba, B, Co, and Mn, and X' is selected from F and/or Cl; and optionally relative Ni contents x1 and x2 in molecular formulas of the first matrix and the second matrix satisfy: 0.8 ≤ x1 ≤ 0.95, 0.8 ≤ x2 ≤ 0.95, and |x1 - x2| ≤ 0.1; or optionally x1 and x2 satisfy: 0 < x1 - x2 < 0.1. When |x1 - x2| ≤ 0.1, it can be realized that the first lithium-nickel transition metal oxide and the second lithium-nickel transition metal oxide have a relatively close degree of delithiation/lithiation at a same charge/discharge voltage, thereby helping increase cycle life of the battery during charging and discharging. When 0 < x1 - x2 < 0.1, in this application, the Ni content x2 in the first lithium-nickel transition metal oxide is slightly higher than the Ni content x2 in the second lithium-nickel transition metal oxide, which effectively balances degree of delithiation/lithiation of the two positive electrode active substances and helps the battery to exert higher energy density.

In any one of the foregoing embodiments, when press density of the positive electrode plate ranges from 3.3 g/cm³ to 3.5 g/cm³, an OI value of the positive electrode plate ranges from 10 to 20. When the OI value of the positive electrode plate is excessively high, the positive electrode plate has relatively serious texture after being cold pressed; and therefore, the electrode plate is prone to expansion during charging and discharging of the battery; or when the OI value of the positive electrode plate is excessively low, particles in the positive electrode active substance in the positive electrode plate have excessively low strength, the particles are prone to crack in middle and later stages of cold pressing and cycling, thereby causing gassing.

In any one of the foregoing embodiments, the positive electrode active substance satisfies 4.4 < (Dᵥ90 - Dᵥ10)/TD < 8, or optionally 4.6 < (Dᵥ90 - Dᵥ10)/TD < 6.5, where TD is tap density of the positive electrode active substance, and is measured in g/cm³. When the positive electrode active substance further satisfies the foregoing value range of (Dᵥ90 - Dᵥ10)/TD, granularity distribution of particles with different morphology in the positive electrode active substance is moderate, and an interstitial volume between the particles is smaller, which facilitates increase in the press density of the positive electrode plate.

In any one of the foregoing embodiments, the tap density TD of the positive electrode active substance ranges from 2.2 g/cm³ to 2.8 g/cm³.

In any one of the foregoing embodiments, the first lithium-nickel transition metal oxide is spherical particles, and degree of sphericity γ of particles in the first lithium-nickel transition metal oxide ranges from 0.7 to 1. When the degree of sphericity of the first lithium-nickel transition metal oxide is within the foregoing range, it indicates that primary particles in the secondary particles have a uniform size, and are relatively uniformly distributed, and the secondary particles are relatively compacted and have higher mechanical strength.

In any one of the foregoing embodiments, a ratio of a maximum length Lₘₐₓ to a minimum length Lₘᵢₙ of particles in the second lithium-nickel transition metal oxide satisfies 1 ≤ Lₘₐₓ/Lₘᵢₙ ≤ 3. The second lithium-nickel transition metal oxide is single crystal particles or particles with quasi-single crystal morphology. When Lₘₐₓ/Lₘᵢₙ of the single particles is within the foregoing range, after the second lithium-nickel transition metal oxide is mixed with secondary particles with degree of sphericity ranging from 0.7 to 1, an interstitial volume of the secondary particles can be better filled in, which increases the press density of the positive electrode plate and a volumetric energy density of the battery and can also effectively suppress volume expansion of the positive electrode plate during cycling, thereby increasing cycling performance.

In any one of the foregoing embodiments, Dᵥ50 of the first lithium-nickel transition metal oxide, that is, Dᵥ50(L), ranges from 5 µm to 18 µm, and Dᵥ50 of the second lithium-nickel transition metal oxide, that is, Dᵥ50(S), ranges from 1 µm to 5 µm; or optionally Dᵥ50(L) and Dᵥ50(S) satisfy: 2 ≤ Dᵥ50(L)/Dᵥ50(S) ≤ 7. This helps suppress a particle cracking problem of a material that contains the secondary particles and a high nickel content and that has a larger particle size, which ensures that the positive electrode active substance can exert a higher gram capacity and also increases overall mechanical strength and press density of the positive electrode plate.

In any one of the foregoing embodiments, a weight percentage of the first lithium-nickel transition metal oxide ranges from 50% to 90%, or optionally from 60% to 85%; and a weight percentage of the second lithium-nickel transition metal oxide ranges from 10% to 50%, or optionally from 15% to 40%. The weight percentages of the first lithium-nickel transition metal oxide and the second lithium-nickel transition metal oxide in the positive electrode plate are controlled within the foregoing range, which can adjust the OI value of the positive electrode plate to a specific extent and also increase the press density and mechanical strength of the electrode plate.

In any one of the foregoing embodiments, the second lithium-nickel transition metal oxide further contains a second coating layer on a surface of the second matrix, and the second coating layer is a metal oxide and/or a non-metal oxide, or optionally a substance of the second coating layer is the metal oxide.

A second aspect of this application provides a preparation method of the positive electrode plate for secondary battery provided in the first aspect of this application.

A third aspect of this application provides a secondary battery, including the positive electrode plate according to the first aspect of this application.

A fourth aspect of this application provides a battery module, including the secondary battery according to the third aspect of this application.

A fifth aspect of this application provides a battery pack, including the battery module according to the fourth aspect of this application.

A sixth aspect of this application provides an apparatus, including the secondary battery according to the third aspect of this application, where the secondary battery is used as a power source of the apparatus.

Compared with the prior art, this application has the following beneficial effects: In the positive electrode plate used for the secondary battery in this application, the positive electrode active substance contains the first lithium-nickel transition metal oxide and the second lithium-nickel transition metal oxide, the first lithium-nickel transition metal oxide is coated secondary particles, the second lithium-nickel transition metal oxide is single crystal particles or particles with quasi-single crystal morphology, particle size distribution of the mixed positive electrode active substance and the OI value of the electrode plate are adjusted, which enhances compressive strength of particles in the positive electrode active substance in the positive electrode plate, effectively suppresses particle cracking of particles in the positive electrode active substance, and also reduces a relative number of crystal planes (003) perpendicular to the positive electrode plate, so that the prepared secondary battery (for example, a lithium-ion battery) has characteristics such as high energy density, low gassing, and low electrode plate expansion ratio, and therefore, has a promising prospects for commercial production.

The battery module, the battery pack, and the apparatus in this application include the secondary battery, and therefore have at least the same advantages as the secondary battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skills in the art may still derive other drawings from the accompanying drawings without creative efforts.
FIG 1 is a three-dimensional diagram of an embodiment of a battery.
FIG 2 is an exploded view of an embodiment of a battery.
FIG 3 is a three-dimensional diagram of an embodiment of a battery module.
FIG 4 is a three-dimensional diagram of an embodiment of a battery pack.
FIG 5 is an exploded view of FIG 4.
FIG 6 is a schematic diagram of an embodiment of an apparatus using a battery as a power source.

Reference signs:
- 1 -: battery pack
- 2 -: upper case
- 3 -: lower case
- 4 -: battery module
- 5 -: battery
- 51 -: housing
- 52 -: electrode assembly
- 53 -: top cover assembly

### DESCRIPTION OF EMBODIMENTS

Embodiments that specifically disclose a positive electrode plate for secondary battery, a secondary battery, a battery module, a battery pack, and an apparatus in this application are described in detail below with reference to the accompanying drawings as appropriate. However, in some cases, unnecessary detailed descriptions may be omitted. For example, in some cases, detailed descriptions of well-known items or repeated descriptions of actually identical structures may be omitted. This is to avoid unnecessary verbosity of the following descriptions and to facilitate understanding by a person skilled in the art. In addition, the accompanying drawings and the following descriptions are provided for a person skilled in the art to fully understand this application, and are not intended to limit the subject described in the claims.

"Ranges" disclosed in this application are defined in the form of lower and upper limits, given ranges are defined by selecting lower and upper limits, and the selected lower and upper limits define boundaries of special ranges. Ranges defined in the method may or may not include end values, and any combination may be used, that is, any lower limit may be combined with any upper limit to form a range. For example, if ranges of 60 to 120 and 80 to 110 are provided for a specific parameter, it should be understood that ranges of 60 to 110 and 80 to 120 are also expectable. In addition, if minimum values of a range are set to 1 and 2, and maximum values of the range are set to 3, 4, and 5, the following ranges are all expectable: 1 to 3, 1 to 4, 1 to 5, 2 to 3, 2 to 4, and 2 to 5. In this application, unless otherwise stated, a value range of "a to b" represents an abbreviated representation of any combination of real numbers between a and b, where both a and b are real numbers. For example, a value range of "0 to 5" means that all real numbers from "0 to 5" are listed herein, and "0-5" is just an abbreviated representation of a combination of these values. In addition, when a parameter is expressed as an integer greater than or equal to 2, this is equivalent to disclosure that the parameter is, for example, an integer: 2, 3, 4, 5, 6, 7, 8, 9, 10, 11, 12, or the like.

Unless otherwise specified, all the embodiments and optional embodiments of this application can be mutually combined to form a new technical solution.

Unless otherwise specified, all the technical features and optional technical features of this application can be mutually combined to form a new technical solution.

Unless otherwise specified, all the steps in this application can be performed sequentially or randomly, or preferably, is performed sequentially. For example, a method includes steps (a) and (b), which indicates that the method may include steps (a) and (b) performed in sequence, or may include steps (b) and (a) performed in sequence. For example, the foregoing method may further include step (c), which indicates that step (c) may be added to the method in any order, for example, the method may include steps (a), (b), and (c), steps (a), (c), and (b), steps (c), (a), and (b), or the like.

Unless otherwise specified, "include" and "contain" mentioned in this application is inclusive or may be exclusive. For example, terms "include" and "contain" can mean that other unlisted components may also be included or contained, or only listed components may be included or contained.

Unless otherwise specified, in this application, the term "or" is inclusive. For example, a phrase "A or B" means "A, B, or both A and B". More specifically, any of the following conditions satisfies the condition "A or B": A is true (or present) and B is false (or not present); A is false (or not present) and B is true (or present); or both A and B are true (or present).

### Positive electrode plate

A first aspect of this application provides a positive electrode plate for secondary battery, where the positive electrode plate includes a positive electrode current collector and a positive electrode active substance layer located on a surface of the positive electrode current collector, the positive electrode active substance layer includes a positive electrode active substance, the positive electrode active substance contains a first lithium-nickel transition metal oxide and a second lithium-nickel transition metal oxide, the first lithium-nickel transition metal oxide contains a first matrix and a first coating layer located on a surface of the first matrix, the first matrix is secondary particles, and a chemical formula of the first lithium-nickel transition metal oxide is expressed by formula I:

Li₁₊ₐ₁Niₓ₁Co_{y1}Mn_{z1}M_{b1}O₂₋ₑ₁Xₑ₁ (I)

in the formula I, -0.1 < a1 < 0.1, 0.5 ≤ x1 ≤ 0.95, 0.05 ≤ y1 ≤ 0.2, 0.03 ≤ z1 ≤ 0.4, 0 ≤ b1 ≤ 0.05, 0 ≤ e1 ≤ 0.1, and x1 + y1 + z1 + b1 = 1, where M is selected from a combination of one or more of Al, Ti, Zr, Nb, Sr, Sc, Sb, Y, Ba, B, Co, and Mn, and X is selected from F and/or Cl.

The first coating layer is selected from a metal oxide and/or a non-metal oxide.

The second lithium-nickel transition metal oxide is single crystal particles or particles with quasi-single crystal morphology.

Particle size distribution characteristics of the positive electrode active substance satisfy: Dᵥ90 ranges from 10 µm to 20 µm and 40 µm < (Dᵥ90 × Dᵥ50)/Dᵥ10 < 90 µm, where Dᵥ10, Dᵥ50, and Dᵥ90 are particle sizes by volume of the positive electrode active substance respectively, and are measured in µm.

When press density of the positive electrode plate ranges from 3.3 g/cm³ to 3.5 g/cm³, an OI value of the positive electrode plate ranges from 10 to 40.

In this application, Dᵥ10 is a corresponding particle size (measured in µm) when a cumulative volume distribution percentage of the positive electrode active substance reaches 10%; Dᵥ50 is a corresponding particle size (measured in µm) when a cumulative volume distribution percentage of a sample reaches 50%; and Dᵥ90 is a corresponding particle size (measured in µm) when a cumulative volume distribution percentage of a sample reaches 90%. Dᵥ10, Dᵥ50, and Dᵥ90 have a meaning well-known in the art, and can be measured by using an instrument or a method well-known in the art. For example, Dᵥ10, Dᵥ50, and Dᵥ90 are easily measured in accordance with a particle size distribution laser diffraction method in GB/T 19077-2016 by using a laser particle size analyzer, for example, a laser particle size analyzer of Mastersizer 2000E from Malvern Instruments Ltd. of UK.

In this application, the OI value of the positive electrode plate is a ratio of a diffraction peak area corresponding to a crystal plane (003) to that corresponding to a crystal plane (110) of the positive electrode active substance in an XRD diffraction pattern of the positive electrode plate. The OI value of the positive electrode plate has a meaning well-known in the art, and can be measured by using an XRD diffractometer. For example, the OI value could be measured in the following method: A prepared positive electrode plate is put horizontally in an XRD diffractometer to measure an XRD diffraction pattern of the positive electrode plate, and a ratio of a diffraction peak area corresponding to the crystal plane (003) to that corresponding to the crystal plane (110) of the positive electrode active substance in the XRD diffraction pattern is calculated, that is, the OI value of the positive electrode plate.

It has been revealed that a secondary battery using a common lithium-nickel transition metal oxide with a high nickel content as the positive electrode active substance has poorer cycling performance. After intensive study on this phenomenon, the applicant finds that a current mainstream lithium-nickel transition metal oxide with a high nickel content is large secondary polycrystal particles formed by aggregation of small primary crystal particles; however, due to a large volume change in a c-axis direction of the lithium-nickel transition metal oxide with a high nickel content during charging and discharging, a crack is likely to occur between the primary particles, thereby deteriorating the cycling performance. In view of this, in the positive electrode plate used for the secondary battery that is provided in this application, the positive electrode active substance layer includes the positive electrode active substance, the positive electrode active substance contains the first lithium-nickel transition metal oxide and the second lithium-nickel transition metal oxide, the first matrix in the first lithium-nickel transition metal oxide is the secondary particles formed by aggregation of the primary particles and is coated with the metal oxide and/or the non-metal oxide, and the second lithium-nickel transition metal oxide is the single crystal particles or the particles with the quasi-single crystal morphology. In this application, the quasi-single crystal usually refers to a particle morphology in which the primary particles have a size of greater than 1 µm but the primary particles have aggregated particles in a specific form. Different from that of the first lithium-nickel transition metal oxide, such aggregation is aggregation of several particles with an irregular shape and weaker binding force; and the single crystal usually refers to a particle morphology in which the primary particles have a size of greater than 1 µm and have no obvious aggregation. In addition, in this application, particle size distribution of the mixed positive electrode active substance and the OI value of the positive electrode plate are adjusted, to effectively suppress particle cracking of particles in the positive electrode active substance, which enhances compressive strength of particles in the positive electrode active substance in the positive electrode plate and also reduces a relative number of crystal planes (003) of the positive electrode active substance in the positive electrode plate, thereby effectively reducing an expansion ratio and suppressing gassing of the electrode plate and obtaining an electrochemical energy storage apparatus with high energy density, low electrode plate expansion ratio, and low gassing.

In this application, the positive electrode active substance contains the first lithium-nickel transition metal oxide and the second lithium-nickel transition metal oxide, and the OI value of the positive electrode active substance powder does not exceed 10. This is because the positive electrode active substance is basically dispersed, crystals are not in a specific orientation, and the positive electrode active substance powder is basically isotropic. In this application, a test method for the OI value of the positive electrode active substance powder is basically the same as that for the positive electrode plate.

To obtain good battery performance, particle size distribution characteristics of the positive electrode active substance in this application should satisfy: Dᵥ90 ranges from 10 µm to 20 µm and 40 µm < (Dᵥ90 × Dᵥ50)/Dᵥ10 < 90 µm. For example, (Dᵥ90 × Dᵥ50)/Dᵥ10 may satisfy 40 µm < (Dᵥ90 × Dᵥ50)/Dᵥ10 < 85 µm, 45 µm < (Dᵥ90 × Dᵥ50)/Dᵥ10 < 90 µm, 45 µm < (Dᵥ90 × Dᵥ50)/Dᵥ10 < 85 µm, 40 µm < (Dᵥ90 × Dᵥ50)/Dᵥ10 < 80 µm, 45 µm < (Dᵥ90 × Dᵥ50)/Dᵥ10 < 80 µm, 40 µm < (Dᵥ90 × Dᵥ50)/Dᵥ10 < 70 µm, 40 µm < (Dᵥ90 × Dᵥ50)/Dᵥ10 < 65 µm, 45 µm < (Dᵥ90 × Dᵥ50)/Dᵥ10 < 65 µm, 40 µm < (Dᵥ90 × Dᵥ50)/Dᵥ10 < 60 µm, 40 µm < (Dᵥ90 × Dᵥ50)/Dᵥ10 < 55 µm, or the like. (Dᵥ90 × Dᵥ50)/Dᵥ10 can be viewed as a product of (Dᵥ90/Dᵥ10) and Dᵥ50, where Dᵥ50 represents a median particle size of the positive electrode active substance, and (Dᵥ90/Dᵥ10) can be approximately viewed as a ratio of an average particle size of large particles to an average particle size of small particles in the positive electrode active substance. Therefore, when (Dᵥ90 × Dᵥ50)/Dᵥ10 is within an appropriate range, it means that the average particle size of the positive electrode active substance is moderate and differences between particle sizes is also moderate.

In the positive electrode plate provided in this application, a lower limit of Dᵥ90 may be, for example, 11 µm, 12 µm, 13 µm, and 14 µm, and an upper limit of Dᵥ90 may be, for example, 19 µm, 18 µm, 17 µm, and 16 µm.In this application, when the upper and lower limits of Dᵥ90 of the positive electrode active substance satisfy the foregoing range, a particle size distribution range of the positive electrode active substance may be further adjusted to ensure the moderate particle size, which helps increase the press density and an anti-cracking capability of the positive electrode plate, thereby further increasing the energy density and suppressing gassing of the battery.

In the positive electrode plate provided in this application, when the press density of the positive electrode plate ranges from 3.3 g/cm³ to 3.5 g/cm³, the OI value of the positive electrode plate may range from 10 to 15, from 15 to 20, from 20 to 25, from 25 to 30, from 30 to 35, or from 35 to 40, or optionally from 10 to 20. Generally, the OI value of the positive electrode plate reflects an overall orientation degree of the crystal planes of the positive electrode active substance in the electrode plate, and is closely related to multiple procedure parameters, for example, a coating speed, drying, and cold pressing, in an electrode plate manufacturing process. When the OI value of the positive electrode plate is excessively high, it indicates that there are an excessively large relative number of crystal planes (003) perpendicular to a length direction of the positive electrode plate, which reflects relatively serious texture of the positive electrode plate occurring after cold pressing; and therefore, the electrode plate is prone to expansion during charging and discharging of the battery. However, if the OI value of the positive electrode plate is excessively low, it indicates that the positive electrode active substance in the positive electrode plate has no obvious orientation in this case, particle strength is excessively low, the particles are prone to crack in middle and later stages of cold pressing and cycling, thereby causing gassing.

In this application, the press density of the electrode plate can be tested by using a method and an instrument well-known in the art (for example, a balance and a micrometer). For example, weight of the active substance layer per unit area can be measured to calculate coating weight CW, a unilateral active substance layer thickness of the electrode plate is measured with the micrometer, and a ratio of the coating weight to the unilateral active substance thickness is the press density PD. When active substance layers are arranged on both upper and lower surfaces of the current collector, the coating weight of the unilateral active substance layer can be calculated based on simple data, then a unilateral active substance layer thickness is measured, and therefore, the press density of the active substance layer can be calculated. In an example, a micrometer can be used to measure and record a thickness of the matrix and a thickness of the electrode plate (with active substance layers on both sides), and then the press density of the active substance layer can be calculated according to a formula: PD = CW × 2/(thickness of the electrode plate - thickness of the matrix), which is measured in g/cm³. In an example, the thickness can be measured by using a micrometer from Mitutoyo in Japan.

In the positive electrode plate provided in this application, the second lithium-nickel transition metal oxide contains a second matrix, and a chemical formula of the second matrix is expressed by formula II:

Li₁₊ₐ₂Niₓ₂Co_{y2}Mn_{z2}M'_{b2}O₂₋ₑ₂X'ₑ₂ (II)

in Formula II, -0.1 < a2 < 0.1, 0.5 ≤ x2 ≤ 0.95, 0.05 ≤ y2 ≤ 0.2, 0.03 ≤ z2 ≤ 0.4, 0 ≤ b2 ≤ 0.05, 0 ≤ e2 ≤ 0.1, and x2 + y2 + z2 + b2 = 1, where M' is selected from a combination of one or more of Al, Ti, Zr, Nb, Sr, Sc, Sb, Y, Ba, B, Co, and Mn, and X' is selected from F and/or Cl.

In the positive electrode plate provided in this application, molecular formulas of the first matrix and the second matrix each may include but are not limited to LiNi_{0.5}Co_{0.2}Mn_{0.3}O₂, LiNi_{0.5}Co_{0.25}Mn_{0.25}O₂, LiNi_{0.55}Co_{0.15}Mn_{0.3}O₂, LiNi_{0.55}Co_{0.1}Mn_{0.35}O₂, LiNi_{0.55}Co_{0.05}Mn_{0.4}O₂, LiNi_{0.6}Co_{0.2}Mn_{0.2}O₂, LiNi_{0.65}Co_{0.15}Mn_{0.2}O₂, LiNi_{0.65}Co_{0.12}Mn_{0.23}O₂, LiNi_{0.65}Co_{0.1}Mn_{0.25}O₂, LiNi_{0.65}Co_{0.05}Mn_{0.3}O₂, LiNi_{0.7}Co_{0.1}Mn_{0.2}O₂, LiNi_{0.75}Co_{0.1}Mn_{0.15}O₂, LiNi_{0.8}Co_{0.1}Mn_{0.1}O₂, LiNi_{0.85}Co_{0.05}Mn_{0.1}O₂, LiNi_{0.88}Co_{0.05}Mn_{0.07}O₂, LiNi_{0.9}Co_{0.05}Mn_{0.05}O₂, LiNi_{0.92}Co_{0.03}Mn_{0.05}O₂, LiNi_{0.95}Co_{0.02}Mn_{0.03}O₂, and the like, or may be a substance modified by substituting a part of the foregoing substance with doping elements M, M', X, and X', where M and M' each are selected from a combination of one or more of Al, Ti, Zr, Nb, Sr, Sc, Sb, Y, Ba, B, Co, and Mn, and X and X' each are selected from F and/or Cl.

In some optional embodiments of this application, a relative Ni content x2 in the molecular formula of the first matrix may satisfy: 0.8 ≤ x1 ≤ 0.95, 0.8 ≤ x1 ≤ 0.85, 0.85 ≤ x1 ≤ 0.9, or 0.9 ≤ x1 ≤ 0.95; a relative Ni content x2 in the molecular formula of the second matrix can satisfy: 0.8 ≤ x2 ≤ 0.95, 0.8 ≤ x1 ≤ 0.85, 0.85 ≤ x1 ≤ 0.9, or 0.9 ≤ x1 ≤ 0.95; and the relative Ni contents x1 and x2 in the first matrix and the second matrix may satisfy: |x1 - x2| ≤ 0.1. The layered lithium transition metal oxide with a higher nickel content is selected as both the first lithium-nickel transition metal oxide and the second lithium-nickel transition metal oxide in this application, which can effectively increase the energy density of the battery. In addition, a difference between the relative Ni contents x1 and x2 in the first matrix and the second matrix is not greater than 0.1, which can achieve relatively close degree of delithiation/lithiation for the first lithium-nickel transition metal oxide and the second lithium-nickel transition metal oxide under a same charge/discharge voltage, thereby helping increase cycle life of the battery during charging and discharging.

In some optional embodiments of this application, relative Ni contents x1 and x2 in the first matrix and the second matrix satisfy: 0 < x1 - x2 < 0.1. In this application, the Ni content x2 in the first lithium-nickel transition metal oxide is slightly higher than Ni content x2 in the second lithium-nickel transition metal oxide, which effectively balances degree of delithiation/lithiation of the two positive electrode active substances and helps the battery to exert higher energy density.

In the positive electrode plate provided in this application, the particle size by volume and tap density TD of the positive electrode active substance satisfy: 4.4 < (Dᵥ90 - Dᵥ10)/TD < 8. Specifically, a value of (Dᵥ90 - Dᵥ10)/TD may range from 7.5 to 8, from 7 to 7.5, from 6.5 to 7, from 6 to 6.5, from 5.5 to 6, from 5 to 5.5, or from 4.4 to 5, or optionally 4.6 < (Dᵥ90 - Dᵥ10)/TD < 6.5. Dᵥ10 and Dᵥ90 are measured in µm, and TD is tap density (measured in g/cm³) of the positive electrode active substance. In this application, when the positive electrode active substance further satisfies the foregoing value range of (Dᵥ90 - Dᵥ10)/TD, granularity distribution of particles with different morphology in the positive electrode active substance is moderate, and an interstitial volume between the particles is smaller, which facilitates increase in the press density of the positive electrode plate.

In the positive electrode plate provided in this application, the tap density TD of the positive electrode active substance may range from 2.2 g/cm³ to 2.8 g/cm³, from 2.2 g/cm³ to 2.3 g/cm³, from 2.3 g/cm³ to 2.4 g/cm³, from 2.4 g/cm³ to 2.5 g/cm³, from 2.5 g/cm³ to 2.6 g/cm³, from 2.6 g/cm³ to 2.7 g/cm³, or from 2.7 g/cm³ to 2.8 g/cm³. Generally, a larger TD corresponds to high press density. However, there is a specific upper limit for the TD due to factors such as compactness of a single particle of a material, particle size distribution of the material, and morphology of the particles.

In this application, TD is powder tap density of the positive electrode active substance, and a specific method for measuring the powder tap density may include: Powder is filled in a container (for example, a 25 mL container, or for another example, the container used may be a graduated cylinder), and after the container is vibrated (for example, a specific vibration condition may be: a vibration frequency of 250 times/min, amplitude of 3 mm, and 5000 vibrations), a mass of powder per unit volume is the powder tap density.

In the positive electrode plate provided in this application, the first lithium-nickel transition metal oxide may be spherical particles, and degree of sphericity γ of the first lithium-nickel transition metal oxide may range from 0.7 to 1. Specifically, the degree of sphericity γ of the first lithium-nickel transition metal oxide ranges from 0.7 to 0.9, from 0.7 to 0.8, from 0.8 to 0.9, or from 0.9 to 1. In this application, the first lithium-nickel transition metal oxide is secondary particles, and when the degree of sphericity of the secondary particles is within the foregoing range, it indicates that the primary particles in the secondary particles have a uniform size, and are relatively uniformly distributed, and the secondary particles are relatively compacted, and have higher mechanical strength.

In this application, the degree of sphericity may be measured in the following method: In a cross-sectional SEM image of the positive electrode plate, at least 30 secondary particles with a cross-sectional diameter greater than the Dᵥ10 value of the positive electrode active substance are selected, and a ratio of a maximum inscribed circle radius (Rₘₐₓ) to a minimum circumscribed circle radius (Rₘᵢₙ) of each secondary particle in the cross-sectional SEM image is measured to calculate an average, so as to obtain γ.

In the positive electrode plate provided in this application, a ratio of a maximum length Lₘₐₓ to a minimum length Lₘᵢₙ of particles in the second lithium-nickel transition metal oxide satisfies 1 ≤ Lₘₐₓ/Lₘᵢₙ ≤ 3, 1 ≤ Lₘₐₓ/Lₘᵢₙ ≤ 1.5, 1.5 ≤ Lₘₐₓ/Lₘᵢₙ ≤ 2, 2 ≤ Lₘₐₓ/Lₘₘ ≤ 2.5, or 2.5 ≤ Lₘₐₓ/Lₘᵢₙ ≤ 3. In this application, the second lithium-nickel transition metal oxide is single crystal particles or particles with quasi-single crystal morphology. When Lₘₐₓ/Lₘᵢₙ of the single particles is within the foregoing range, after the second lithium-nickel transition metal oxide is mixed with secondary particles with a degree of sphericity ranging from 0.7 to 1, an interstitial volume between the secondary particles can be better filled in, which increases the press density of the positive electrode plate and a volumetric energy density of the battery and can also effectively suppress volume expansion of the positive electrode plate during cycling, thereby increasing cycling performance.

In this application, Lₘₐₓ/Lₘᵢₙ may be measured in the following method: In a cross-sectional SEM image of the positive electrode plate, at least 30 single crystal particles or particles with quasi-single crystal morphology having a cross-sectional diameter greater than the Dᵥ10 value of the positive electrode active substance are selected, and a ratio of a maximum length (Lₘₐₓ) to a minimum length (Lₘᵢₙ) of particles in the cross-sectional SEM image is measured to calculate an average, so as to obtain Lₘₐₓ/Lₘᵢₙ.

In the positive electrode plate provided in this application, Dᵥ50 of the first lithium-nickel transition metal oxide, that is, Dᵥ50(L), can range from 5 µm to 18 µm, from 5 µm to 6 µm, from 6 µm to 8 µm, from 8 µm to 10 µm, from 10 µm to 12 µm, from 12 µm to 14 µm, from 14 µm to 16 µm, or from 16 µm to 18 µm, or optionally from 8 µm to 12 µm. Dᵥ50 of the second lithium-nickel transition metal oxide, that is, Dᵥ50(S), may range from 1 µm to 5 µm, from 1 µm to 2 µm, from 2 µm to 3 µm, from 3 µm to 4 µm, or from 4 µm to 5 µm. In this application, the matrix in the first lithium-nickel transition metal oxide is the secondary particles, the second lithium-nickel transition metal oxide is the single crystal particles or the particles with the quasi-single crystal morphology, and the first lithium-nickel transition metal oxide generally has a larger particle size than the second lithium-nickel transition metal oxide, and a particle size relationship between the first lithium-nickel transition metal oxide and the second lithium-nickel transition metal oxide may optionally satisfy: 2 ≤ Dᵥ50(L)/Dᵥ50(S) ≤ 7, 2 ≤ Dᵥ50(L)/Dᵥ50(S) ≤ 3, 3 ≤ Dᵥ50(L)/Dᵥ50(S) ≤ 4, 4 ≤ Dᵥ50(L)/Dᵥ50(S) ≤ 5, 5 ≤ Dᵥ50(L)/Dᵥ50(S) ≤ 6, or 6 ≤ Dᵥ50(L)/Dᵥ50(S) ≤ 7. In this application, when a ratio of Dᵥ50(L) of the first lithium-nickel transition metal oxide to Dᵥ50(S) of the second lithium-nickel transition metal oxide is within the foregoing range, particle cracking of a material containing the secondary particles and a high nickel content and having a larger particle size is suppressed, which ensures that the positive electrode active substance can exert a higher gram capacity and also enhances overall mechanical strength and press density of the positive electrode plate.

In the positive electrode plate provided in this application, a proportion of the positive electrode active substance with respect to the entire active substance layer may range, for example, from 95% to 99%. In the positive electrode plate provided in this application, a weight percentage of the first lithium-nickel transition metal oxide with respect to a total mass of the positive electrode active substance may range from 50% to 90%, from 85% to 90%, from 80% to 85%, from 75% to 80%, from 70% to 75%, from 65% to 70%, from 60% to 65%, from 55% to 60%, or from 50% to 55%, or optionally from 60% to 85%. A weight percentage of the second lithium-nickel transition metal oxide may range from 10% to 50%, from 10% to 15%, from 15% to 20%, from 20% to 25%, from 25% to 30%, from 30% to 35%, from 35% to 40%, from 40% to 45%, or from 45% to 50%, or optionally from 15% to 40%. In this application, the weight percentages of the first lithium-nickel transition metal oxide and the second lithium-nickel transition metal oxide in the positive electrode plate are controlled within the foregoing range, which can adjust the OI value of the positive electrode plate to a specific extent and also increase the press density and mechanical strength of the electrode plate.

In the positive electrode plate provided in this application, the second lithium-nickel transition metal oxide may further contain a second coating layer located on a surface of the second matrix, and the second coating layer is a metal oxide and/or a non-metal oxide.

In the positive electrode plate provided in this application, the first coating layer and/or the second coating layer may be the metal oxide and/or the non-metal oxide, for example, may be an oxide containing only a metal element or a non-metal element, or an oxide containing both the metal element and the non-metal element. In the foregoing oxide, the metal element may usually be, for example, aluminum, zirconium, zinc, titanium, silicon, tin, tungsten, yttrium, cobalt, and barium, and the non-metal element may usually be, for example, phosphorus and boron. Specifically, the first coating layer and/or the second coating layer may contain, but is not limited to, a combination of one or more of aluminum oxide, zirconium oxide, zinc oxide, titanium oxide, silicon oxide, tin oxide, tungsten oxide, yttrium oxide, cobalt oxide, barium oxide, phosphorus oxide, boron oxide, lithium aluminum oxide, lithium zirconium oxide, lithium zinc oxide, lithium magnesium oxide, lithium tungsten oxide, lithium yttrium oxide, lithium cobalt oxide, lithium barium oxide, lithium phosphorus oxide, lithium boron oxide, or the like. In this application, the foregoing metal oxide and/or non-metal oxide are/is selected as the coating layer of the positive electrode active substance. An oxide coating layer is well bound with the matrix, and the coating layer is not likely to peel off during charging and discharging, to reduce a part of a contact area between the matrix and the electrolyte, which can effectively modify a surface of the positive electrode material containing a high nickel content and reduce side reactions between the positive electrode material and the electrolyte, thereby effectively suppressing gassing of the battery.

In the positive electrode material provided in this application, the first coating layer may optionally contain both at least one metal oxide and one non-metal oxide. The oxide containing the foregoing element can not only increase adhesion stability of the coating layer on a matrix surface of the secondary particles, but also endow the coating layer with both specific ionic conductivity and electronic conductivity, thereby reducing impact of the coating layer on polarization of the positive electrode material.

### Preparation method of a positive electrode plate

A second aspect of this application provides a preparation method of the positive electrode plate for secondary battery provided in the first aspect of this application, and a proper preparation method of the positive electrode plate should be well-known to a person skilled in the art, for example, the positive electrode plate may include:
providing a positive electrode active substance containing a first lithium-nickel transition metal oxide and a second lithium-nickel transition metal oxide; and
mixing the positive electrode active substance, a binder, and a conductive agent to form a slurry, and then applying the slurry on a positive electrode current collector.

In the preparation method of the positive electrode material provided in this application, the first lithium-nickel transition metal oxide and/or the second lithium-nickel transition metal oxide may be surface-modified. For example, the first lithium-nickel transition metal oxide and/or the second lithium-nickel transition metal oxide may be separately surface-modified and then mixed, where surface modification methods of the first lithium-nickel transition metal oxide and the second lithium-nickel transition metal oxide may be the same or different; or alternatively, the first lithium-nickel transition metal oxide and the second lithium-nickel transition metal oxide may be first mixed and then subjected to surface modification processing.

The preparation method of the positive electrode plate provided in this application may include: providing the first lithium-nickel transition metal oxide. A method for providing the first lithium-nickel transition metal oxide should be well-known to a person skilled in the art, and for example, may include: mixing and sintering a raw material of a matrix of the first lithium-nickel transition metal oxide to provide a first matrix; and coating the first matrix to provide the first lithium-nickel transition metal oxide. A person skilled in the art can select a proper raw material and proportion based on elemental composition of the first lithium-nickel transition metal oxide to further prepare and obtain the first matrix. For example, raw materials of the first lithium-nickel transition metal oxide may include a precursor of the first lithium-nickel transition metal oxide, a lithium source, an M source, an X source, and the like, and proportions of raw materials are usually prepared based on proportions of elements in the first lithium-nickel transition metal oxide. More specifically, the precursor of the first lithium-nickel transition metal oxide may include but is not limited to Ni_{0.5}Co_{0.2}Mn_{0.3}(OH)₂, Ni_{0.5}Co_{0.25}Mn_{0.25}(OH)₂, Ni_{0.55}Co_{0.15}Mn_{0.3}(OH)₂, Ni_{0.55}Co_{0.1}Mn_{0.35}(OH)₂, Ni_{0.55}Co_{0.05}Mn_{0.4}(OH)₂, Ni_{0.6}Co_{0.2}Mn_{0.2}(OH)₂, Ni_{0.65}Co_{0.15}Mn_{0.2}(OH)₂, Ni_{0.65}Co_{0.12}Mn_{0.23}(OH)₂, Ni_{0.65}Co_{0.1}Mn_{0.25}(OH)₂, Ni_{0.65}Co_{0.05}Mn_{0.3}(OH)₂, Ni_{0.7}Co_{0.1}Mn_{0.2}(OH)₂, Ni_{0.75}Co_{0.1}Mn_{0.15}(OH)₂, Ni_{0.8}Co_{0.1}Mn_{0.1}(OH)₂, Ni_{0.88}Co_{0.05}NM_{0.07}(OH)₂, Ni_{0.92}Co_{0.03}Mn_{0.05}(OH)₂, Ni_{0.95}Co_{0.02}Mn_{0.03}(OH)₂, and the like; the lithium source may be a lithium-containing compound, and the lithium-containing compound may include but is not limited to a combination of one or more of LiOH·H₂O, LiOH, Li₂CO₃, Li₂O, and the like; the M source may usually be a compound containing an element M, and the compound containing the element M may be one or more of an oxide, a nitrate, and a carbonate containing at least one of Al, Ti, Zr, Nb, Sr, Sc, Sb, Y, Ba, Co, and Mn; and the X source may be a compound containing an element X, and the compound containing the element X may include but is not limited to a combination of one or more of LiF, NaCl, and the like. A sintering condition of the raw material of the matrix of the first lithium-nickel transition metal oxide may be a sintering temperature of 700°C to 900°C and an oxygen concentration ≥ 20%. A method for coating the first matrix may specifically include: sintering the first matrix in the presence of a compound containing a coating element, where the compound containing a coating element may be an oxide, a nitrate, a phosphate, a carbonate, and the like containing one or more of Al, Ba, Zn, Ti, Co, W, Y, Si, Sn, B, and P, a percentage of a used coating element may be usually ≤ 2wt%, and a sintering condition during the coating treatment may range from 200°C to 700°C.

The preparation method of the positive electrode plate provided in this application may include: providing the second lithium-nickel transition metal oxide. A method for providing the second lithium-nickel transition metal oxide should be well-known to a person skilled in the art, and for example, may include: mixing and sintering a raw material of a matrix of the second lithium-nickel transition metal oxide to provide a second matrix; and coating the second matrix to provide the second lithium-nickel transition metal oxide. A person skilled in the art can select a proper raw material and proportion based on elemental composition of the second lithium-nickel transition metal oxide to further prepare and obtain the second matrix. For example, raw materials of the second lithium-nickel transition metal oxide may include a precursor of the second lithium-nickel transition metal oxide, a lithium source, an M' source, an X' source, and the like, and proportions of raw materials are usually prepared based on proportions of elements in the second lithium-nickel transition metal oxide. More specifically, the precursor of the second lithium-nickel transition metal oxide may include but is not limited to Ni_{0.5}Co_{0.2}Mn_{0.3}(OH)₂, Ni_{0.5}Co_{0.25}Mn_{0.25}(OH)₂, Ni_{0.55}Co_{0.15}Mn_{0.3}(OH)₂, Ni_{0.55}Co_{0.1}Mn_{0.35}(OH)₂, Ni_{0.55}Co_{0.05}Mn_{0.4}(OH)₂, Ni_{0.6}Co_{0.2}Mn_{0.2}(OH)₂, Ni_{0.65}Co_{0.15}Mn_{0.2}(OH)₂, Ni_{0.65}Co_{0.12}Mn_{0.23}(OH)₂, Ni_{0.65}Co_{0.1}Mn_{0.25}(OH)₂, Ni_{0.65}Co_{0.05}Mn_{0.3}(OH)₂, Ni_{0.7}Co_{0.1}Mn_{0.2}(OH)₂, Ni_{0.75}Co_{0.1}Mn_{0.15}(OH)₂, Ni_{0.8}Co_{0.1}Mn_{0.1}(OH)₂, Ni_{0.88}Co_{0.05}Mn_{0.07}(OH)₂, Ni_{0.92}Co_{0.03}Mn_{0.05}(OH)₂, Ni_{0.95}Co_{0.02}Mn_{0.03}(OH)₂, and the like; the lithium source may be a lithium-containing compound, and the lithium-containing compound may include but is not limited to a combination of one or more of LiOH·H₂O, LiOH, Li₂CO₃, Li₂O, and the like; the M' source may usually be a compound containing element M, and the compound containing the element M' may be one or more of an oxide, a nitrate, and a carbonate containing at least one element of Al, Ti, Zr, Nb, Sr, Sc, Sb, Y, Ba, Co, and Mn; and the X' source may be a compound containing an element X', and the compound containing the element X' may include but is not limited to a combination of one or more of LiF, NaCl, and the like. A sintering condition of the raw material of the matrix of the second lithium-nickel transition metal oxide may be a sintering temperature of 750°C to 950°C and an oxygen concentration ≥ 20%. A method for coating the second matrix may specifically include: sintering the second matrix in the presence of a compound containing a coating element, where the compound containing a coating element may be an oxide, a nitrate, a phosphate, a carbonate, and the like containing one or more of Al, Ba, Zn, Ti, Co, W, Y, Si, Sn, B, and P, a percentage of a used coating element may be usually ≤ 2wt%, and a sintering condition during the coating treatment may range from 200°C to 700°C.

In the preparation method of the positive electrode plate provided in this application, a binder usually includes a fluorine-containing polyolefin binder. Water is usually a good solvent for the fluorine-containing polyolefin binder, that is, the fluorine-containing polyolefin binder usually has good water solubility. For example, the fluorine-containing polyolefin binder may include but is not limited to polyvinylidene fluoride (PVDF), vinylidene fluoride copolymer, their modified (for example, modified by carboxylic acid, acrylic acid, or acrylonitrile) derivatives, or the like. In the positive electrode active substance layer, a mass percentage of the binder may range, for example, from 0.1wt% to 10wt%, from 0.2wt% to 8wt%, from 0.3wt% to 6wt%, or from 0.5wt% to 3wt%. Due to poor electronic conductivity of the binder, no excessively large amount of binder should be used. Optionally, a mass percentage of the binder in the positive electrode active substance layer ranges from 0.5wt% to 3wt%, to obtain lower electrode plate impedance.

In the preparation method of the positive electrode plate provided in this application, the conductive agent may be a variety of conductive agents applicable to lithium-ion (secondary) batteries in the field, for example, may include but is not limited to a combination of one or more of acetylene black, conductive carbon black, vapor grown carbon fiber (VGCF), carbon nanotube (CNT), Ketjen black, or the like. Mass of the conductive agent may account for 0.5wt% to 10wt% of a total mass of the positive electrode active substance layer. Optionally, a mass percentage of the conductive agent to the positive active substance in the positive electrode plate ranges from 1.0wt% to 5.0wt%.

In the preparation method of the positive electrode plate provided in this application, the positive electrode current collector of the positive electrode plate may usually be layered. The positive electrode current collector is usually a structure or a part that can collect current. The positive electrode current collector may be made of various materials suitable for serving as a positive electrode current collector of lithium-ion batteries in the field. For example, the positive electrode current collector may include but is not limited to metal foil and the like, and more specifically, may include but is not limited to copper foil, aluminum foil, and the like.

### Secondary battery

A third aspect of this application provides a secondary battery, including the positive electrode plate in the first aspect of this application.

In the secondary battery provided in this application, it should be noted that, the secondary battery may be a super capacitor, a lithium-ion battery, a lithium metal battery, or a sodium-ion battery. In the embodiments of this application, only an embodiment in which the secondary battery is a lithium-ion battery is shown, but this application is not limited thereto.

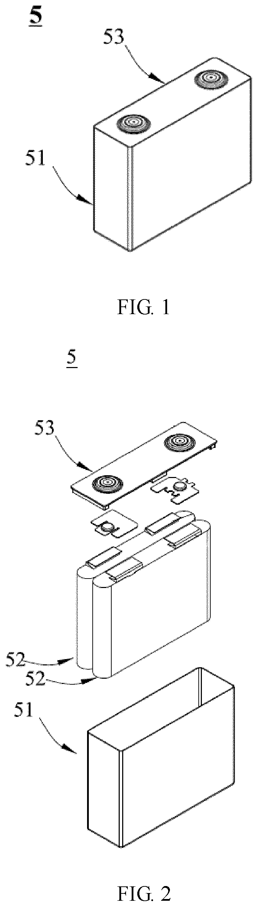

FIG 1 is a three-dimensional diagram of a specific embodiment of a lithium-ion battery. FIG 2 is an exploded view of FIG 1. Referring to FIG 1 and

FIG 2, a battery 5 includes a housing 51, an electrode assembly 52, a top cover assembly 53, and an electrolyte (not shown). The electrode assembly 52 is accommodated in the housing 51. The number of the electrode assemblies 52 is not limited, and there may be one or more electrode assemblies.

It should be noted that the battery 5 in FIG 1 is a can-type battery, but this application is not limited thereto. The battery 5 may be a pouch-type battery, which means that the housing 51 is replaced with a metal plastic film and the top cover assembly 53 is eliminated.

The lithium-ion battery may include a positive electrode plate, a negative electrode plate, a separator sandwiched between the positive electrode plate and the negative electrode plate, and an electrolyte. The positive electrode plate may be the positive electrode plate provided in the first aspect of this application. The preparation method of a lithium-ion battery should be well-known to a person skilled in the art. For example, the positive electrode plate, the separator, and the negative electrode plate each may be layered, which may be cut into target sizes and then stacked in sequence; or may be further wound to a target size to form a battery cell; or may be further combined with an electrolyte to form the lithium-ion battery.

In the lithium-ion battery, the negative electrode plate usually may include a negative electrode current collector and a negative electrode active substance layer on a surface of the negative electrode current collector, and the negative electrode active substance layer usually includes a negative electrode active substance. The negative electrode active substance may be various materials of negative electrode active substances suitable for lithium-ion batteries in the field, for example, may include but is not limited to a combination of one or more of graphite, soft carbon, hard carbon, carbon fiber, a meso-carbon microbead, a silicon-based material, a tin-based material, lithium titanate, another metal that can form an alloy with lithium, or the like. The graphite may be selected from a combination of one or more of artificial graphite, natural graphite, and modified graphite. The silicon-based material may be selected from a combination of one or more of elemental silicon, a silicon-oxygen compound, a silicon-carbon composite, and a silicon alloy. The tin-based material may be selected from a combination of one or more of elemental tin, a tin-oxygen compound, and a tin alloy. The negative electrode current collector is usually a structure or a part that collects current. The negative electrode current collector may be made of various materials suitable for serving as a negative electrode current collector of lithium-ion batteries in the field. For example, the negative electrode current collector may include but is not limited to metal foil and the like, and more specifically, may include but is not limited to copper foil and the like.

In the lithium-ion battery, the separator may be made of various materials suitable for separators of lithium-ion batteries in the field, for example, may include but is not limited to a combination of one or more of polyethylene, polypropylene, polyvinylidene fluoride, kevlar, polyethylene terephthalate, polytetrafluoroethylene, polyacrylonitrile, polyimide, polyamide, polyester, and natural fibers.

In the lithium-ion battery, the electrolyte may usually include an electrolyte salt and a solvent, and a suitable electrolyte applicable to the lithium-ion battery should be well-known to a person skilled in the art. For example, the electrolyte salt may usually include a lithium salt, and the like. More specifically, the lithium salt may be an inorganic lithium salt and/or an organic lithium salt, and the like, specifically including but not limited to a combination of one or more of LiPF₆, LiBF₄, LiN(SO₂F)₂ (LiFSI), LiN(CF₃SO₂)₂ (LiTFSI), LiClO₄, LiAsF₆, LiB(C₂O₄)₂ (LiBOB), LiBF₂C₂O₄ (LiDFOB), and the like. For another example, a concentration of the electrolyte salt may range from 0.8 mol/L to 1.5 mol/L. For another example, the solvent used in the electrolyte may be various solvents applicable to the electrolyte of the lithium-ion battery in the art, and is usually a non-aqueous solvent, or optionally may be the organic solvent, specifically including but not limited to a combination of one or more of ethylene carbonate, propylene carbonate, 2,3-butylene carbonate, pentenyl carbonate, dimethyl carbonate, diethyl carbonate, dipropyl carbonate, ethyl methyl carbonate, and the like, or their halogenated derivatives.

### Battery module

A fourth aspect of this application provides a battery module, including the secondary battery provided in the third aspect of this application. The battery module may usually include one or more secondary batteries, the battery module may be used as a power source or an energy storage apparatus, and the number of batteries in the battery module may be adjusted based on application and a capacity of the battery module.

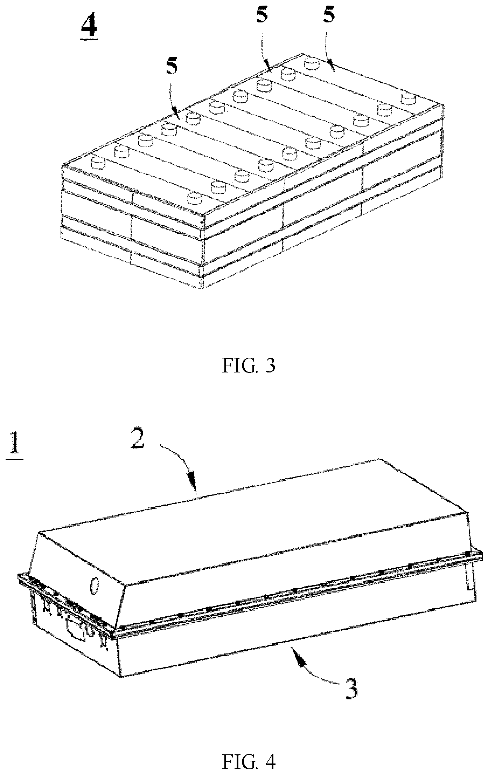

FIG 3 is a three-dimensional diagram of a specific embodiment of a battery module.

Referring to FIG 3, the battery module 4 includes a plurality of batteries 5. The plurality of batteries 5 are arranged in a longitudinal direction.

### Battery pack

A fifth aspect of this application provides a battery pack, including the secondary battery provided in the third aspect or the battery module provided in the fourth aspect of this application.

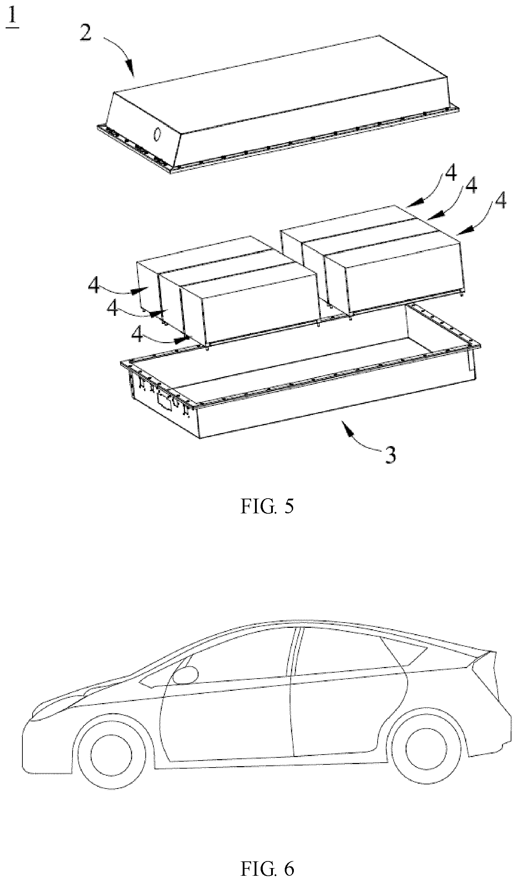

FIG 4 is a three-dimensional diagram of a specific embodiment of a battery pack 1. FIG 5 is an exploded view of FIG 4.

Referring to FIG 4 and FIG 5, a battery pack 1 includes an upper case 2, a lower case 3, and a battery module 4.

The upper case 2 and the lower case 3 are assembled to form a space for accommodating the battery module 4. The battery module 4 is disposed in the space in which the upper case 2 and the lower case 3 are assembled. An output electrode of the battery module 4 extends through either the upper case 2 or the lower case 3 or between the upper case 2 and the lower case 3 to supply power or to be charged externally. The number and an arrangement of the battery modules 4 used in the battery pack 1 may be determined based on an actual need. The battery pack 1 may be used as a power source or an energy storage apparatus.

### Apparatus

A sixth aspect of this application provides an apparatus, including the secondary battery provided in the third aspect of this application, where the secondary battery is used as a power source of the apparatus.

FIG 6 is a three-dimensional diagram of a specific embodiment of the foregoing apparatus. In FIG 6, the apparatus using the battery 5 is an electromobile. However, the apparatus using the battery 5 is obviously not limited to this, but may be any electric vehicle other than electric vehicles (for example, an electric bus, an electric tram, an electric bicycle, an electric motorbike, an electric scooter, an electric golf vehicle, or an electric truck), an electric vessel, an electric tool, an electronic device, and an energy storage system. The electromobile may be a full electric vehicle, a hybrid electric vehicle, or a plug-in hybrid electric vehicle. Certainly, based on an actual use form, the apparatus provided in the sixth aspect of this application may include the battery module 4 provided in the fourth aspect of this application. Certainly, the apparatus provided in the sixth aspect of this application may also include the battery pack 1 provided in the fifth aspect of this application.

The following further describes beneficial effects of this application with reference to examples.

To make the invention objectives, technical solutions, and beneficial technical effects of this application clearer, this application is further described below in detail with reference to examples. However, it should be understood that the examples of this application are merely intended to explain this application, but not to limit this application, and the examples of this application are not limited to the examples given in this specification. In examples in which specific test conditions or operating conditions are not specified, preparation is performed according to conventional conditions or according to conditions recommended by a material supplier.

In addition, it should be understood that the one or more method steps mentioned in this application do not exclude the presence of other method steps before and after the combined steps or addition of other method steps between these explicitly mentioned steps, unless otherwise specified. It should further be understood that a combination and connection relationship between one or more devices/apparatuses mentioned in this application do not exclude a case that there may be other devices/apparatuses before and after the combined devices/apparatuses or a case that other devices/apparatuses may be added between the two explicitly mentioned devices/apparatuses, unless otherwise specified. In addition, unless otherwise specified, a number of each method step is merely a convenient tool for identifying each method step, and is not intended to limit a sequence of method steps or limit an implementable scope of this application. A change or adjustment of the relative relationship without a substantial change in the technical content shall be deemed to fall within the implementable scope of this application.

In the following the examples, all reagents, materials, and instruments used are commercially available unless otherwise specified.

### Example 1

### 1. Preparation of positive electrode active substance

(1) Precursors of a first lithium-nickel transition metal oxide and a second lithium-nickel transition metal oxide were prepared.
   Nickel sulfate, manganese sulfate, and cobalt sulfate were prepared into a 1 mol/L solution at a molar ratio of 8:1:1, and a precursor of the first lithium-nickel transition metal oxide with a particle size Dᵥ50 (L) of 9.7 µm was prepared through a hydroxide co-precipitation technology; and nickel sulfate, manganese sulfate, and cobalt sulfate were prepared into a 1 mol/L solution at a molar ratio, and a precursor of the second lithium-nickel transition metal oxide with a particle size of 2.9 µm was prepared through the hydroxide co-precipitation technology. In the process of preparing the precursors, a particle size and morphology of the precursors of the first lithium-nickel transition metal oxide and the second lithium-nickel transition metal oxide were adjusted by controlling reaction duration, a pH value in co-precipitation, and an ammonia concentration.
(2) Preparation method of a first lithium-nickel transition metal oxide (polycrystalline LiNi_{0.8}Co_{0.1}Mn_{0.1}O₂):
   The precursor Ni_{0.8}Co_{0.1}Mn_{0.1}(OH)₂ of the first lithium-nickel transition metal oxide and the Li-containing compound LiOH·H₂O were added into mixing equipment at a molar ratio of 1:1.05 for mixing, then put into an atmosphere furnace at 830°C for sintering, and subjected to mechanical grinding after cooling, to obtain a matrix of the first lithium-nickel transition metal oxide.
   The matrix of the first lithium-nickel transition metal oxide, 0.2wt% of a compound Al₂O₃ containing a coating element Al, and 0.2wt% of a compound boric acid containing a coating element B were added into the mixing equipment for mixing, and then put into the atmosphere furnace at 500°C for 5 hours for sintering, to form a first coating layer of the first lithium-nickel transition metal oxide, that is, to obtain the surface-coated first lithium-nickel transition metal oxide. The Dᵥ50 and degree of sphericity of the foregoing material, and the coating material are given in Table 1.
(3) Preparation method of a second lithium-nickel transition metal oxide (polycrystalline LiNi_{0.8}Co_{0.1}Mn_{0.1}O₂):
   The precursor Ni_{0.8}Co_{0.1}Mn_{0.1}(OH)₂ of the second lithium-nickel transition metal oxide and the Li-containing compound LiOH·H₂O were added into mixing equipment at a molar ratio of 1:1.05 for mixing, then put into an atmosphere furnace at 870°C for 4 hours for sintering under an oxygen concentration of 30%, and subjected to fluid energy milling after cooling, to obtain a matrix of the second lithium-nickel transition metal oxide.
   The matrix of the second lithium-nickel transition metal oxide and 0.2wt% of a compound Al₂O₃ containing a coating element Al were added into the mixing equipment for mixing, and then put into the atmosphere furnace at 500°C for 5 hours for sintering, to form a coating layer of a lithium-nickel transition metal oxide B, that is, to obtain the surface-modified second lithium-nickel transition metal oxide. The Dᵥ50 of the material, ratio Lₘₐₓ/Lₘᵢₙ, and the coating material are given in Table 1.
(4) The foregoing surface-modified first lithium-nickel transition metal oxide and the surface-modified second lithium-nickel transition metal oxide were evenly mixed at a mass ratio of 7:3, to obtain the positive electrode active substance in Example 1. The TD, (Dᵥ90 - Dᵥ10)/TD, and (Dᵥ90 × Dᵥ50)/Dᵥ10 of the positive electrode active substance in Example 1 and an OI value of the positive electrode plate are given in Table 1.

### 2. Preparation of battery

### (1) Preparation of positive electrode plate

Step 1: The foregoing obtained positive electrode active substance, a binder polyvinylidene fluoride, and a conductive agent acetylene black were mixed at a mass ratio of 98:1:1, N-methylpyrrolidone (NMP) was added, and the resulting mixture was stirred evenly by using a vacuum mixer, to obtain a positive electrode slurry; and the positive electrode slurry was evenly applied on aluminum foil of a thickness of 12 µm.

Step 2: The coated electrode plate was dried in an oven at 100°C to 130°C, cold-pressed and slit to obtain the positive electrode plate.

### (2) Preparation of negative electrode plate

A negative electrode active substance graphite, a thickener sodium carboxymethyl cellulose, a binder styrene-butadiene rubber, and a conductive agent acetylene black were mixed at a mass ratio of 97:1:1:1, deionized water was added, and the resulting mixture was stirred by a vacuum mixer to obtain a negative electrode slurry; the negative electrode slurry was evenly applied on copper foil of a thickness of 8 µm; the copper foil was dried at room temperature, then transferred to an oven at 120°C for 1 hour for drying, and then cold-pressed and split to obtain the negative electrode plate.

### (3) Preparation of electrolyte

An organic solvent was a mixed solution of ethylene carbonate (EC), ethyl methyl carbonate (EMC), and diethyl carbonate (DEC), where a volume ratio of EC to EMC to DEC was 20:20:60. In an argon atmosphere glove box with a water content less than 10 ppm, a fully dried lithium salt was dissolved in the organic solvent and mixed evenly to obtain the electrolyte. A concentration of the lithium salt was 1 mol/L.

### (4) Preparation of separator

A polypropylene separator of a thickness of 12 µm was used as a separator.

### (5) Preparation of battery

The positive electrode plate, the separator, and the negative electrode plate were stacked in sequence, so that the separator was sandwiched between positive and negative electrode plates for isolation, then the positive electrode plate, the separator, and the negative electrode plate were wound to form a prismatic bare cell, and the bare cell was packaged with an aluminum-plastic film, and then heated at 80°C for drying; a corresponding non-aqueous electrolyte was injected; and the mixture was subjected to processes such as sealing, standing, hot/cold pressing, formation, clamping, and grading, to obtain a finished product of a battery.

### Example 2

For preparation methods of the positive electrode plate and the battery in Example 2, refers to Example 1. A difference was that a mass ratio of the first lithium-nickel transition metal oxide to the second lithium-nickel transition metal oxide was 9:1. The TD, (Dv90 - Dv10)/TD, and (Dv90 × Dv50)/Dv10 of the prepared positive electrode active substance and an OI value of the positive electrode plate are given in Table 1.

### Example 3

For preparation methods of the positive electrode plate and the battery in Example 3, refers to Example 1. A difference was that a mass ratio of the first lithium-nickel transition metal oxide to the second lithium-nickel transition metal oxide was 6:4. The TD, (Dv90 - Dv10)/TD, and (Dv90 × Dv50)/Dv10 of the prepared positive electrode active substance and an OI value of the positive electrode plate are given in Table 1.

### Example 4

For preparation methods of the positive electrode plate and the battery in Example 4, refers to Example 1. A difference was that a ratio of Ni:Co:Mn in the second lithium-nickel transition metal oxide was 5:2:3, a particle size Dᵥ50(S) of the second lithium-nickel transition metal oxide was equal to 4.3 µm, Lₘₐₓ/Lₘᵢₙ = 1.5, coating elements were Al and Ti, compounds used in a sintering process were aluminum oxide and titanium oxide, and a mass ratio of the first lithium-nickel transition metal oxide to the second lithium-nickel transition metal oxide was 8:2. The TD, (Dv90 - Dv10)/TD, and (Dv90 × Dv50)/Dv10 of the prepared positive electrode active substance and an OI value of the positive electrode plate are given in Table 1.

### Example 5

For preparation methods of the positive electrode plate and the battery in Example 5, refers to Example 1. Differences were that a ratio of Ni:Co:Mn in the first lithium-nickel transition metal oxide was 6:2:2, a particle size Dᵥ50(L) of the first lithium-nickel transition metal oxide was equal to 9.6 µm, and degree of sphericity γ was equal to 0.81. The TD, (Dᵥ90 - Dᵥ10)/TD, and Dᵥ90/Dᵥ10 ^{∗} Dᵥ50 of the prepared positive electrode active substance and an OI value of the positive electrode plate are given in Table 1.

### Example 6

For preparation methods of the positive electrode plate and the battery in Example 6, refers to Example 1. A difference was that a ratio of Ni:Co:Mn in the second lithium-nickel transition metal oxide was 9:0.5:0.5, a mass ratio of the first lithium-nickel transition metal oxide to the second lithium-nickel transition metal oxide was 8:2. The TD, (Dᵥ90 - Dᵥ10)/TD, and (Dᵥ90 × Dᵥ50)/Dᵥ10 of the prepared positive electrode active substance and an OI value of the positive electrode plate are given in Table 1.

### Example 7

For preparation methods of the positive electrode plate and the battery in Example 7, refers to Example 1. A difference was that a coating element of the first lithium-nickel transition metal oxide was B, that is, a compound corresponding to Al was not used for sintering. The TD, (Dᵥ90 - Dᵥ10)/TD, and (Dᵥ90 × Dᵥ50)/Dᵥ10 of the prepared positive electrode active substance and an OI value of the positive electrode plate are given in Table 1.

### Example 8

For preparation methods of the positive electrode plate and the battery in Example 8, refers to Example 1. A difference was that a coating element of the first lithium-nickel transition metal oxide was B, that is, the compound corresponding to Al was not used for sintering, coating elements of the second lithium-nickel transition metal oxide were Al and B, and compounds used in a sintering process were aluminum oxide and boron oxide. The TD, (Dᵥ90 - Dᵥ10)/TD, and (Dᵥ90 × Dᵥ50)/Dᵥ10 of the prepared positive electrode active substance and an OI value of the positive electrode plate are given in Table 1.

### Example 9

For preparation methods of the positive electrode plate and the battery in Example 9, refers to Example 1. A difference was that a ratio of Ni:Co:Mn in the first lithium-nickel transition metal oxide was 8.3:1.4:0.3, a particle size Dᵥ50(L) of the first lithium-nickel transition metal oxide was equal to 12.3 µm, degree of sphericity γ was equal to 0.85, a coating element was Ba, a compound used during corresponding coating was barium oxide, a particle size Dᵥ50(S) of the second lithium-nickel transition metal oxide was equal to 2.2 µm, Lₘₐₓ/Lₘᵢₙ = 1.7, and a mass ratio of the first lithium-nickel transition metal oxide to the second lithium-nickel transition metal oxide was 6:4. The TD, (Dv90 - Dv10)/TD, and (Dv90 × Dv50)/Dv10 of the prepared positive electrode active substance and an OI value of the positive electrode plate are given in Table 1.

### Example 10

For preparation methods of the positive electrode plate and the battery in Example 10, refers to Example 1. A difference was that a ratio of Ni:Co:Mn in the first lithium-nickel transition metal oxide was 8.3:1.4:0.3, a particle size Dᵥ50(L) of the first lithium-nickel transition metal oxide was equal to 12.3 µm, degree of sphericity γ was equal to 0.85, a compound used during corresponding coating was barium oxide, a ratio of Ni:Co:Mn in the second lithium-nickel transition metal oxide was 5:2:3, a particle size Dᵥ50(S) of the second lithium-nickel transition metal oxide was equal to 4.3 µm, Lₘₐₓ/Lₘᵢₙ = 1.5, coating elements were Al and Ti, compounds used in a sintering process were aluminum oxide and titanium oxide, and a mass ratio of the first lithium-nickel transition metal oxide to the second lithium-nickel transition metal oxide was 5:5. The TD, (Dv90 - Dv10)/TD, and (Dv90 × Dv50)/Dv10 of the prepared positive electrode active substance and an OI value of the positive electrode plate are given in Table 1.

### Comparative Example 1

For preparation methods of the positive electrode plate and the battery in Comparative Example 1, refers to Example 1. A particle size Dᵥ50(L) of the first lithium-nickel transition metal oxide was equal to 7.8 µm, degree of sphericity γ was equal to 0.77, a ratio of Ni:Co:Mn in the second lithium-nickel transition metal oxide was 5:2:3, a particle size Dᵥ50(S) of the second lithium-nickel transition metal oxide was equal to 4.3 µm, Lₘₐₓ/Lₘᵢₙ = 1.5, coating elements were Al and Ti, and compounds used in a sintering process were aluminum oxide and titanium oxide. The TD, (Dv90 - Dv10)/TD, and (Dv90 × Dv50)/Dv10 of the prepared positive electrode active substance and an OI value of the positive electrode plate are given in Table 1.

### Comparative Example 2

For preparation methods of the positive electrode plate and the battery in Comparative Example 2, refers to Example 1. A difference was that in the preparation method of the positive electrode active substance, no second lithium-nickel transition metal oxide was used. The TD, (Dv90 - Dv10)/TD, and (Dv90 × Dv50)/Dv10 of the prepared positive electrode active substance and an OI value of the positive electrode plate are given in Table 1.

### Comparative Example 3

For preparation methods of the positive electrode plate and the battery in Comparative Example 3, refers to Example 1. A difference was that a mass ratio of the first lithium-nickel transition metal oxide to the second lithium-nickel transition metal oxide was 4:6. The TD, (Dᵥ90 - Dᵥ10)/TD, and (Dᵥ90 × Dᵥ50)/Dᵥ10 of the prepared positive electrode active substance and an OI value of the positive electrode plate are given in Table 1.

### Comparative Example 4

For preparation methods of the positive electrode plate and the battery in Comparative Example 4, refers to Example 9. A difference was that a particle size Dᵥ50(L) of the first lithium-nickel transition metal oxide was equal to 16.8 µm, a particle size Dᵥ50(S) of the second lithium-nickel transition metal oxide was equal to 2.9 µm, Lₘₐₓ/Lₘᵢₙ = 2, and a mass ratio of the first lithium-nickel transition metal oxide to the second lithium-nickel transition metal oxide was 9:1. The TD, (Dv90 - Dv10)/TD, and (Dv90 × Dv50)/Dv10 of the prepared positive electrode active substance and an OI value of the positive electrode plate are given in Table 1.

### Comparative Example 5

For preparation methods of the positive electrode plate and the battery in Comparative Example 5, refers to Example 1. A difference was that no first lithium-nickel transition metal oxide was used in the process of preparing the positive electrode plate. The TD, (Dv90 - Dv10)/TD, and (Dv90 × Dv50)/Dv10 of the prepared positive electrode active substance and an OI value of the positive electrode plate are given in Table 1.

### Comparative Example 6

For preparation methods of the positive electrode plate and the battery in Comparative Example 6, refers to Example 1. A difference was that in the process of preparing the first lithium-nickel transition metal oxide, no coating treatment was performed. The TD, (Dv90 - Dv10)/TD, and (Dv90 × Dv50)/Dv10 of the prepared positive electrode active substance and an OI value of the positive electrode plate are given in Table 1.

### Test methods

(1) Test method of a degree of sphericity of secondary particles:
   In a cross-sectional SEM image photographed for the positive electrode plate, at least 30 secondary particles with a cross-sectional diameter greater than Dᵥ10 of the positive electrode active substance were selected, and a ratio of a maximum inscribed circle radius (Rₘₐₓ) to a minimum circumscribed circle radius (Rₘᵢₙ) of each secondary particle in the SEM image was measured to calculate an average, so as to obtain degree of sphericity γ of the secondary particles.
(2) Test method of Lₘₐₓ/Lₘᵢₙ of single crystal particles or particles with quasi-single crystal morphology:
   In a cross-sectional SEM image of the positive electrode plate, at least 30 single crystal particles or particles with quasi-single crystal morphology having a cross-sectional diameter greater than the Dᵥ10 value of the positive electrode active substance were selected, and a ratio of a maximum length (Lₘₐₓ) to a minimum length (Lₘᵢₙ) of particles in the SEM image was measured to calculate an average, so as to obtain Lₘₐₓ/Lₘᵢₙ Test results of the examples and comparative examples are given in Table 2.
(3) Test method of tap density TD:
   10 g of powder was fed into a graduated cylinder with a graduated scale of 25 mL, and after feeding, the graduated cylinder was vibrated 5000 times with amplitude of 3 mm at a vibration frequency of 250 times/min; and a volume occupied by the powder in the graduated cylinder in this case was read, to calculate a mass of the powder per unit volume, that is, the tap density TD of the powder. Test results of the examples and comparative examples are given in Table 2.
(4) Test method of an OI value of a positive electrode plate and an OI value of positive electrode active substance powder:
   A prepared positive electrode plate was put horizontally in an XRD diffractometer to measure an XRD diffraction pattern of the positive electrode plate, and a ratio of a diffraction peak area corresponding to the crystal plane (003) to that corresponding to the crystal plane (110) of the positive electrode active substance in the XRD diffraction pattern was calculated, that is, the Of value of the positive electrode plate. Test results of the examples and comparative examples are given in Table 2.
   A test method for the OI value of the positive electrode active substance powder was basically the same as the test method for the positive electrode plate, and a difference was that a tested sample was the positive electrode active substance powder.
(5) Test method of press density:
   (1) An electrode plate was cut into a membrane of a length of 1000 mm; (2) specific pressure was applied to the positive electrode plate for rolling, and due to ductility of aluminum foil, the length of the membrane was extended to 1006 mm; (3) A disc of 1540.25 mm² was prepared through punching, and weight and a thickness of the disc were measured, and in this way, the press density could be calculated.
   Test results of the examples and comparative examples are given in Table 2.
(6) Test method of a capacity retention ratio after 400 cycles at 45°C:
   At 45°C, a lithium-ion battery was charged to a voltage of 4.2 V at a constant current of 1C, then charged to a current of 0.05C at a constant voltage of 4.2 V, and then discharged at a constant current of 1C until a final voltage was 2.8 V; and a discharge capacity of the first cycle was recorded. Then 400 charge and discharge cycles were performed based on the foregoing operation, and a discharge capacity after the 400 cycles was recorded. Based on the discharge capacity at the first cycle and the discharge capacity after the 400 cycles, the capacity retention ratio after the 400 cycles at 45°C was calculated.
   Test results of the examples and comparative examples are given in Table 2.
(7) Test for DCR increase after cycling:

At 25°C, the battery was charged to a 100% SOC at 1C constant current/constant voltage (charged to 4.2 V at a constant current of 1C, and then charged to 0.05C at a constant voltage of 4.2 V), then discharged at the constant current of 1C for 30 minutes, and allowed to stand for 60 minutes; a voltage U1 after standing was recorded; and then the battery was discharged at a constant current of 4C for 30 seconds, and a voltage U2 after the discharge was recorded.

Direct current resistance of the lithium-ion battery was calculated according to a formula: DCR = (U2 - U1)/4C.

Test results of the examples and comparative examples are given in Table 2.

It can be seen, through a comparison between the examples and the comparative examples, that the first lithium-nickel transition metal oxide in the form of secondary particles and the second lithium-nickel transition metal oxide in the form of single crystal particles or particles with quasi-single crystal morphology were mixed, and particle size distribution of the mixed positive electrode active substances and the OI value of the positive electrode plate were adjusted, which can increase the press density, suppress particle cracking during cycling, increase cycle life, and help DCR increase during cycling. The surface-coated metal oxide and non-metal oxide can significantly increase the cycle life and help DCR increase after cycling.

The foregoing descriptions are merely preferred embodiments of this invention, but are not intended to impose any form of limitation or substantial limitation on this application. It should be noted that a person of ordinary skill in the technical field can further make several improvements or supplements without departing from the method in this application, and such improvements or supplements shall fall within the protection scope of this application. Some equivalent changes such as alterations, modifications and evolution made by a person skilled in the art through technical content disclosed above without departing from the spirit and scope of this application are all equivalent embodiments of this application. In addition, any equivalent changes such as alterations, modifications, and evolution made to the foregoing embodiments based on a substantial technology of this application still fall within the scope of the technical solutions of this application.

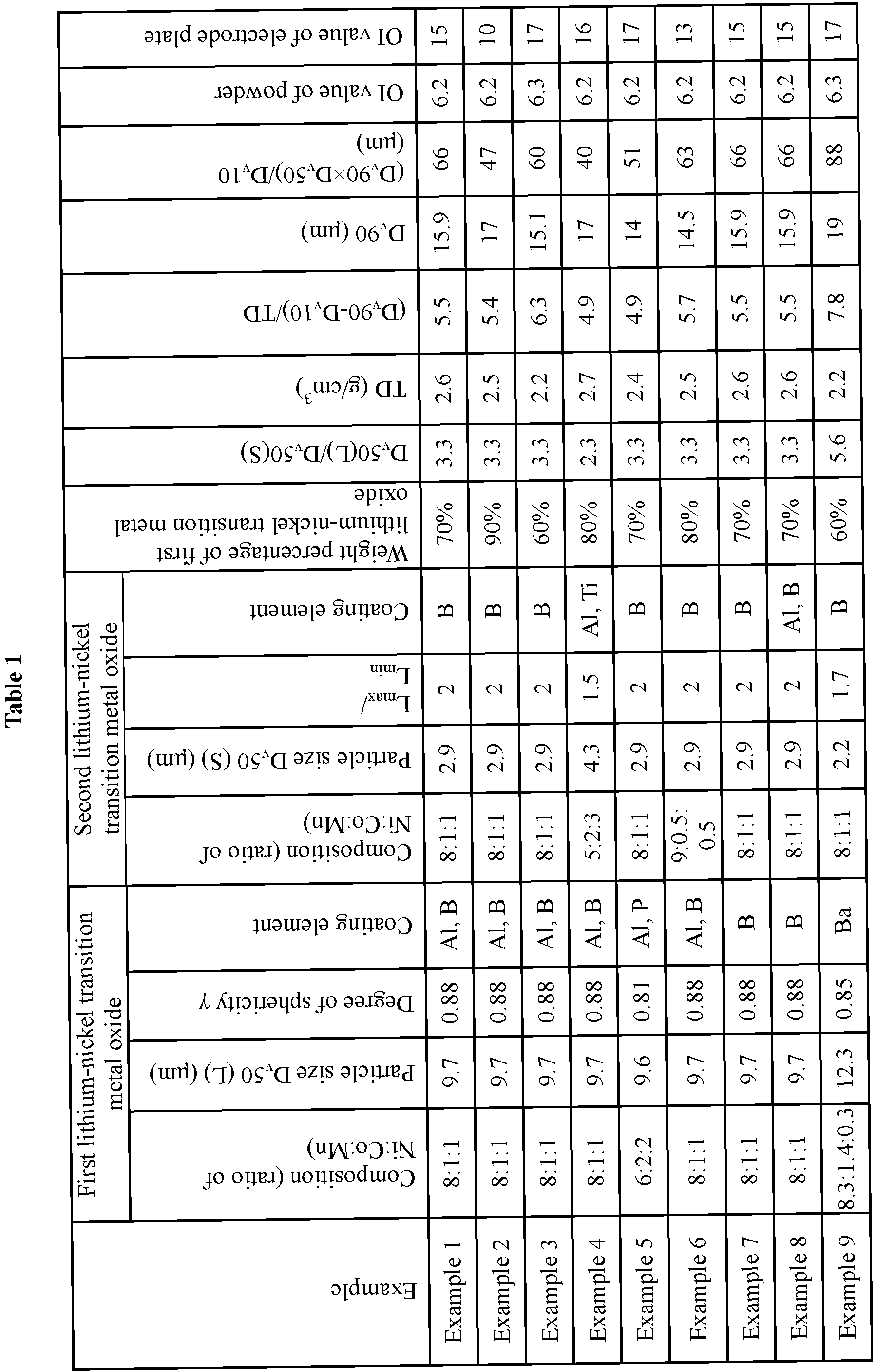

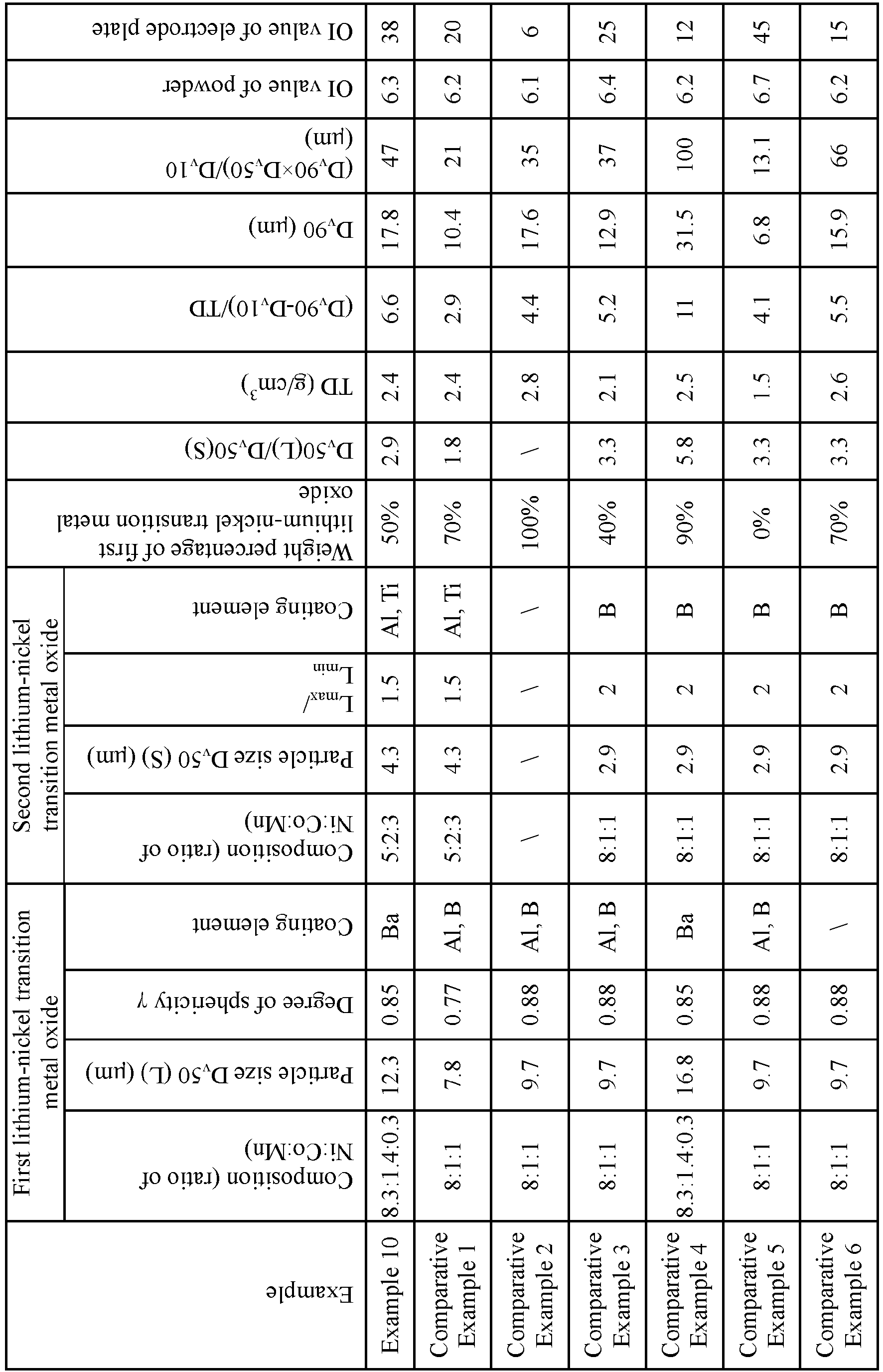

**Table 2**

| Example | Press density (g/cm³) | Capacity retention ratio after 400 cycles at 45°C | DCR increase after cycling |
|---|---|---|---|
| Example 1 | 3.58 | 94.1% | 20.0% |
| Example 2 | 3.52 | 93.5% | 13.0% |
| Example 3 | 3.55 | 94.0% | 26.0% |
| Example 4 | 3.51 | 94.9% | 10.0% |
| Example 5 | 3.50 | 94.7% | 8.0% |
| Example 6 | 3.56 | 93.5% | 21.0% |
| Example 7 | 3.58 | 93.1% | 62.0% |
| Example 8 | 3.58 | 94.3% | 55.0% |
| Example 9 | 3.5 | 91.0% | 88.0% |
| Example 10 | 3.52 | 93.0% | 43.0% |
| Comparative Example 1 | 3.4 | 94.3% | 23.0% |
| Comparative Example 2 | 3.47 | 92.9% | 11.0% |
| Comparative Example 3 | 3.47 | 93.0% | 50.0% |
| Comparative Example 4 | 3.45 | 89.0% | 90.0% |
| Comparative Example 5 | 3.27 | 92.8% | 150.0% |
| Comparative Example 6 | 3.58 | 80.0% | 130.0% |

## Claims

1. A positive electrode plate for secondary battery, wherein the positive electrode plate comprises a positive electrode current collector and a positive electrode active substance layer located on a surface of the positive electrode current collector, the positive electrode active substance layer comprises a positive electrode active substance, the positive electrode active substance contains a first lithium-nickel transition metal oxide and a second lithium-nickel transition metal oxide, the first lithium-nickel transition metal oxide contains a first matrix and a first coating layer located on a surface of the first matrix, the first matrix is secondary particles, and a chemical formula of the first matrix is expressed by formula I:
Li₁₊ₐ₁Niₓ₁Co_{y1}Mn_{z1}M_{b1}O₂₋ₑ₁Xₑ₁ (I)
in the formula I, -0.1 < a1 < 0.1, 0.5 ≤ x1 ≤ 0.95, 0.05 ≤ y1 ≤ 0.2, 0.03 ≤ z1 ≤ 0.4, 0 ≤ b1 ≤ 0.05, 0 ≤ e1 ≤ 0.1, and x1 + y 1 + z1 + b1 = 1, wherein M is selected from a combination of one or more of Al, Ti, Zr, Nb, Sr, Sc, Sb, Y, Ba, B, Co, and Mn, and X is selected from F and/or Cl;
the first coating layer is selected from a metal oxide and/or a non-metal oxide;
the second lithium-nickel transition metal oxide is single crystal particles or particles with quasi-single crystal morphology;
particle size distribution of the positive electrode active substance satisfies that Dᵥ90 ranges from 10 µm to 20 µm and 40 µm < (Dᵥ90 × Dᵥ50)/Dᵥ10 < 90 µm; and
when press density of the positive electrode plate ranges from 3.3 g/cm³ to 3.5 g/cm³, an OI value of the positive electrode plate ranges from 10 to 40.

2. The positive electrode plate according to claim 1, wherein the OI value of the positive electrode plate is a ratio of a diffraction peak area corresponding to a crystal plane (003) to that corresponding to a crystal plane (110) of the positive electrode active substance in an XRD diffraction pattern of the positive electrode plate.

3. The positive electrode plate according to claim 1 or 2, wherein the second lithium-nickel transition metal oxide contains a second matrix, and a chemical formula of the second matrix is expressed by formula II:
Li₁₊ₐ₂Niₓ₂CO_{y2}Mn_{z2}M'_{b2}O₂₋ₑ₂X'ₑ₂ (II)
in Formula II, -0.1 < a2 < 0.1, 0.5 ≤ x2 ≤ 0.95, 0.05 ≤ y2 ≤ 0.2, 0.03 ≤ z2 ≤ 0.4, 0 ≤ b2 ≤ 0.05, 0 ≤ e2 ≤ 0.1, and x2 + y2 + z2 + b2 = 1, wherein M' is selected from a combination of one or more of Al, Ti, Zr, Nb, Sr, Sc, Sb, Y, Ba, B, Co, and Mn, and X' is selected from F and/or Cl; and
optionally relative Ni contents x1 and x2 in molecular formulas of the first matrix and the second matrix satisfy:
0.8 ≤ x1 ≤ 0.95, 0.8 ≤ x2 ≤ 0.95, and |x1 - x2| ≤ 0.1; or
optionally x1 and x2 satisfy: 0 < x1 - x2 < 0.1.

4. The positive electrode plate according to any one of claims 1 to 3, wherein when the press density of the positive electrode plate ranges from 3.3 g/cm³ to 3.5 g/cm³, the OI value of the positive electrode plate ranges from 10 to 20.

5. The positive electrode plate according to any one of claims 1 to 4, wherein the positive electrode active substance satisfies 4.4 < (Dᵥ90 - Dᵥ10)/TD < 8, or optionally 4.6 < (Dᵥ90 - Dᵥ10)/TD < 6.5, wherein
Dᵥ10 and Dᵥ90 are measured in µm, and TD is tap density of the positive electrode active substance and is measured in g/cm³.

6. The positive electrode plate according to any one of claims 1 to 5, wherein the tap density TD of the positive electrode active substance ranges from 2.2 g/cm³ to 2.8 g/cm³.

7. The positive electrode plate according to any one of claims 1 to 6, wherein the first lithium-nickel transition metal oxide is spherical particles, and degree of sphericity γ of first lithium-nickel transition metal oxide particles ranges from 0.7 to 1.

8. The positive electrode plate according to any one of claims 1 to 7, wherein a ratio of a maximum length Lₘₐₓ to a minimum length Lₘᵢₙ of particles in the second lithium-nickel transition metal oxide satisfies 1 ≤ Lₘₐₓ/Lₘᵢₙ ≤ 3.

9. The positive electrode plate according to any one of claims 1 to 8, wherein Dᵥ50 of the first lithium-nickel transition metal oxide, that is, Dᵥ50(L), ranges from 5 µm to 18 µm, and Dᵥ50 of the second lithium-nickel transition metal oxide, that is, Dᵥ50(S), ranges from 1 µm to 5 µm; or
optionally Dᵥ50(L) and Dᵥ50(S) satisfy: 2 ≤ Dᵥ50(L)/Dᵥ50(S) ≤ 7.

10. The positive electrode plate according to any one of claims 1 to 9, wherein a weight percentage of the first lithium-nickel transition metal oxide in the positive electrode active substance ranges from 50% to 90%, or optionally from 60% to 85%; and
a weight percentage of the second lithium-nickel transition metal oxide ranges from 10% to 50%, or optionally from 15% to 40%.

11. The positive electrode plate according to any one of claims 1 to 10, wherein the second lithium-nickel transition metal oxide further contains a second coating layer on a surface of the second matrix, and the second coating layer is a metal oxide and/or a non-metal oxide, or optionally a substance of the second coating layer is the metal oxide.

12. A secondary battery, comprising the positive electrode plate according to any one of claims 1 to 11.

13. A battery module, comprising the secondary battery according to claim 12.

14. A battery pack, comprising the battery module according to claim 13.

15. An apparatus, comprising the secondary battery according to claim 12, wherein the secondary battery serves as a power source of the apparatus; and optionally the apparatus comprises an electric vehicle, a hybrid electric vehicle, a plug-in hybrid electric vehicle, an electric bicycle, an electric scooter, an electric golf vehicle, an electric truck, an electric vessel, and an energy storage system.
